(19) Europäisches Patentamt
European Patent Office
Office européen des brevets

(11) Publication number: **0 051 499 B1**

(12) **EUROPEAN PATENT SPECIFICATION**

(45) Date of publication of patent specification: **19.02.86**

(51) Int. Cl.$^4$: **C 08 G 65/20**, C 08 G 65/04

(21) Application number: **81305252.9**

(22) Date of filing: **04.11.81**

# (54) A process for the preparation of polyether glycols.

(30) Priority: **04.11.80 JP 153781/80**
**06.11.80 JP 155184/80**
**29.05.81 JP 80997/81**

(43) Date of publication of application:
**12.05.82 Bulletin 82/19**

(45) Publication of the grant of the patent:
**19.02.86 Bulletin 86/08**

(84) Designated Contracting States:
**DE FR GB**

(56) References cited:
**DE-B-2 146 231**
**US-A-3 381 038**
**US-A-3 449 267**

**Chemical Abstracts vol. 95, no. 2 13 July 1981 Columbus, Ohio, USA MITSUBISHI CHEMICAL INDUSTRIES CO., LTD. "Poly(tetramethylene glycol)." page 21, abstract no. 8033v**

(73) Proprietor: **JAPAN SYNTHETIC RUBBER CO., LTD.**
**11-24, Tsukiji-2-chome Chuo-ku**
**Tokyo (JP)**

(72) Inventor: **Matsumoto, Shuichi**
**19-21, Sumiyoshidai**
**Midori-ku Yokohama (JP)**
Inventor: **Yasuda, Kenji**
**29, Aobadai-2-chome**
**Midori-ku Yokohama (JP)**
Inventor: **Endoh, Masayuki**
**29, Aobadai-2-chome**
**Midori-ku Yokohama (JP)**
Inventor: **Harada, Kunihiro**
**2657-6, Naruse**
**Machida-shi (JP)**

(74) Representative: **Tubby, David George et al**
**MARKS & CLERK 57-60 Lincoln's Inn Fields**
**London WC2A 3LS (GB)**

**EP 0 051 499 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for the preparation of polyether glycols containing oxytetramethylene groups, generally as the principal constituent, which process enables highly functional polyether glycols having, if desired, a relatively low molecular weight to be prepared. These polyether glycols are useful as starting materials for the preparation of polyurethanes, elastomeric polyesters, elastomeric polyamides and similar polymers.

It is well-known that polytetramethylene glycols (hereinafter referred to as "PTMG") and polyether glycols having oxytetramethylene groups as the principal constituent (both PTMG and said polyether glycols being hereinafter referred to collectively as "PTMG-type polyether glycols") can be produced by polymerizing tetrahydrofuran alone or in admixture with one or more other copolymerizable cyclic ethers in the presence of a ring-opening polymerization catalyst and then hydrolyzing the polymerization product. The industrial importance of these PTMG-type polyether glycols has recently been highlighted because this material, when used for the preparation of polyurethanes, elastomeric polyesters, elastomeric polyamides and similar polymers, can provide products with many excellent properties, including mechanical properties and anti-hydrolytic properties, and such materials are currently widely used in many fields of industry. For such uses, the polyether glycol must normally have a relatively low molecular weight (in terms of the number-average molecular weight, this is generally from 500 to 5,000) and it is also important that the polyether glycol should be hydroxy-terminated at both ends of the molecule; in other words, it should have a high functionality (close to 2).

Various types of ring-opening polymerization catalysts are known for the polymerization of tetrahydrofuran, but relatively few such catalysts are capable of easily providing hydroxy-terminated PTMG-type polyether glycols having a relatively low molecular weight. Amongst such catalysts are those having as the main component a strongly acidic protonic acid (particularly fuming sulphuric acid or fluorosulphuric acid), as described, for example, in Japanese Patent Publications No. 25438/73, No. 28917/74 and No. 3104/70. Using such catalysts, it is easy to produce a polymerization product having a number-average molecular weight within the range from 1,000 to 3,000 and it is also possible easily to obtain a hydroxy-terminated PTMG-type polyether glycol by hydrolyzing this polymerization product under acidic conditions. However, these methods, when applied industrially, require the use of a relatively large quantity of catalyst in order to obtain a satisfactory conversion (i.e. percentage of monomer converted to polymer) and it is therefore necessary to provide rather large facilities for the storage and handling of the catalyst. Furthermore, since the process releases a large quantity of acid as a waste material, a great deal of labour and cost is required for the disposal of this acid.

Such a large quantity of the catalyst is required because the catalytic efficiency of these types of catalyst is low, resulting in insufficient utilization of the catalyst added. It would, accordingly, be desirable to develop a way of improving the catalytic efficiency and thus of decreasing the amount of catalyst to be used. Moreover, because these catalysts are strong protonic acids, a large quantity of heat is evolved when the catalyst is mixed with tetrahydrofuran. It is, therefore, not only difficult to control the reaction temperature, but also such undesirable phenomena as colouration or decomposition of the polymerization product occur. In order to avoid these undesirable phenomena, the polymerization may be performed at a relative low temperature not greater than 0°C. However, at such low temperatures, the rate of polymerization is reduced and the reaction thus requires a very long time. In addition, if the polymerization product is to have a molecular weight of 1,000 or more, the entire polymerization system in a high conversion operation can solidify and lose fluidity, making it impossible to carry out such operations as stirring or transport. Moreover, polymerization at such low temperatures tends to produce a polymerization product having a relatively high molecular weight and it is extremely difficult to obtain PTMG-type polyether glycols having a molecular weight of 1,000 or less.

We have now discovered a process for producing PTMG-type polyether glycols based on the known method using fuming sulphuric acid and/or fluorosulphuric acid as the main component of the ring-opening catalyst, which enables catalytic efficiency to be markedly enhanced and the desired PTMG-type polyether glycol to be produced at a high conversion without resulting in colouration of the polymerization product or solidification of the polymerization system. What is more, the process of the invention enables PTMG-type polyether glycols having a number-average molecular weight within the range from 500 to 5,000, particularly from 500 to 3,000, to be produced with a particularly good catalytic efficiency. The term "catalytic efficiency" is here defined to mean the ratio of the number of moles of PTMG-type polyether glycol obtained to the number of moles of catalyst used for the polymerization and the formula employed to calculate the catalytic efficiency is shown hereinafter in the Examples.

Thus, the present invention consists in a process for producing a polyether glycol in which:

(A) monomer comprising tetrahydrofuran is polymerized in the presence of a ring-opening polymerization catalyst comprising fuming sulphuric acid and/or fluorosulphuric acid;

(B) the reaction product is hydrolyzed under strongly acidic conditions by the addition of water or of an aqueous alkaline solution and preferably by heating; and

(C) the hydrolysis product, which is the desired PTMG-type polyether glycol, is washed, characterized in that the polymerization of step (A) is effected by:

(1) in a first stage, contacting said monomer with said catalyst at a temperature of from −30°C to +10°C and
(2) in a subsequent stage, when conversion of said monomer to polymer is at least 5%, elevating the reaction temperature to a value which is from 0°C to 40°C and is at least 10°C higher than the temperature in said first stage, and continuing the polymerization at the elevated temperature.

By carrying out the polymerization in the process of the present invention in at least two (and preferably only two) stages, it is possible to increase the catalytic efficiency substantially, thus reducing the amount of catalyst used and hence the catalyst cost as well as the amount of waste acid produced in the process, which also decreases the amount of treatment required for the waste acid. Moreover, the process of the invention, when carried out under the preferred conditions described hereafter, is not accompanied, at high conversions of the monomer, by such undesirable phenomena as colouration of the polymerization product and solidification of the polymerization system, which are typical of conventional methods. As a result, PTMG-type polyether glycols having a number-average molecular weight within the range of from 500 to 5,000, which is most suited for industrial use, can very easily be obtained. In conventional methods, particularly when using a catalyst whose principal component is fuming sulphuric acid, the catalytic efficiency is low and, because there is a significant tendency of the polymerization product to colour, polymerization must be performed at a low temperature, which leads to the problem of possible solidification of the polymerization system at high monomer conversions. For these reasons, the process of the present invention is of particular value when applied to polymerization processes using fuming sulphuric acid as the principal component of the catalyst.

In step (A) of the process of the invention, the contact of the monomer with the catalyst to effect polymerization is first conducted at a low temperature (the first stage) and then the temperature is raised under specific conditions and the polymerization is continued at the elevated temperature (the subsequent stage). In the first stage, the reaction temperature is within the range of from −30°C to +10°C. If the reaction temperature exceeds 10°C in the first stage, there is substantially no improvement in catalytic efficiency and control of the reaction is difficult because of evolution of heat when the monomer is mixed with the catalyst, thus resulting in an increased tendency for the polymerization product to colour or decompose. On the other hand, if the reaction temperature in the first stage is below −30°C, very high capacity cooling equipment is required and the polymerization rate becomes very low, resulting in reduced productivity. In order to achieve the best improvement in catalytic efficiency, we prefer to control the reaction temperature in the first stage to a value within the range of from −30°C to 0°C.

In the subsequent stage, when the conversion of monomer to polymer has reached at least 5%, the reaction temperature is raised to a value which is within the range of from 0°C to 40° and is at least 10°C higher than that in the first stage, and the polymerization reaction is continued at this temperature. If the conversion at the end of the first stage is less than 5%, there is no significant improvement in catalytic efficiency and, in order to maximize the catalytic efficiency, the conversion of the end of the first stage is preferably 10% or more. On the other hand, the upper limit for conversion at the end of the first stage may vary depending upon the ratio of monomer to catalyst, the desired molecular weight of the PTMG-type polyether glycol and other factors and a single maximum value cannot be given. In general, the upper limit for conversion at the end of the first stage is determined by taking into account the facts that too high a conversion limits the improvement in catalytic efficiency and that, in the case of a high molecular weight product, the viscosity of the polymerization system will increase and the entire system can be converted to a solid state. Considering both the improvement in catalytic efficiency and operational convenience, it is desirable that the conversion at the end of the first stage should be set within the following ranges, depending upon the number-average molecular weight of the desired PTMG-type polyether glycol: thus, for polyether glycols having a number-average molecular weight below 1,000, the conversion at the end of the first stage is preferably from 10 to 40%; for polyether glycols having a number-average molecular weight of from 1,000 to 2,000, the conversion at the end of the first stage is preferably within the range of from 10 to 40%; and for polyether glycols having a number-average molecular weight above 2,000, the conversion at the end of the first stage is preferably from 10 to 35%.

If the reaction temperature in the subsequent stage is below 0°C, substantially no improvement in catalytic efficiency is achieved and it becomes very difficult to produce a PTMG-type polyether glycol having a number-average molecular weight below 1,000. On the other hand, if the reaction temperature in the subsequent stage exceeds 40°C, the final conversion becomes low because of the influence of the chemical equilibrium on the polymerization reaction, resulting in a reduced catalytic efficiency and an increased load for the recovery and purification of unreacted monomer. Colouration or decomposition of the polymerization product may also occur. Furthermore, substantially no improvement in catalytic efficiency is observed if the difference between the polymerization temperature in the first and the subsequent stages is less than 10°C. In order to maximize catalytic efficiency and operational advantages, it is desirable that the reaction temperature in the subsequent stage should fall within the range of from 10°C to 40°C and that the difference between the reaction temperature in the first and subsequent stages should be at least 15°C. The time required for the polymerization in the subsequent stage is not specifically defined, as it may vary depending upon the ratio of monomer to catalyst, the reaction temperature and other factors, but generally best results are achieved if the polymerization time is from 1 to 5 hours.

The monomer used in the process of the invention is either tetrahydrofuran alone or a mixture of

tetrahydrofuran with one or more other copolymerizable cyclic ethers. Examples of such copolymerizable cyclic ethers which may be employed in the process of the invention include: ethers having 3 ring atoms, such as ethylene oxide, propylene oxide or epichlorohydrin; ethers having 4 ring atoms, such as oxacyclobutane, 3,3-dimethyloxacyclobutane or 3,3-bis(chloromethyl)oxacyclobutane; ethers having 5 ring atoms, such as 2-methyltetrahydrofuran, 3-methyltetrahydrofuran or 2,5-dihydrofuran; tetrahydropyran; and oxacycloheptane. In order to achieve, as is preferred, a polyether glycol having oxytetramethylene groups as the principal constituent, the copolymerizable cyclic ether(s) are preferably used in an amount no more 100 parts by weight, more preferably no more than 50 parts by weight, per 100 parts by weight of tetrahydrofuran.

The ring-opening polymerization catalyst employed in the process of the present invention comprises fuming sulphuric acid and/or fluorosulphuric acid. The fuming sulphuric acid may be of the type commonly used for the production of PTMG-type polyether glycols, that is to say one having a free $SO_3$ concentration of 40% by weight or less, preferably from 20 to 35% by weight.

The fuming sulphuric acid may be used alone as the catalyst but, if necessary, a suitable co-catalyst may be added for the purpose of increasing the polymerization rate or of adjusting the molecular weight. Suitable known co-catalysts include perchloric acid, perchlorates, metallic fluorides, metallic borofluorides and aromatic compounds, but preferred, for reasons of easy availability and treatment and good effect, are metallic borofluorides, particularly sodium borofluoride or potassium borofluoride. Fluorosulphuric acid, when used as the ring-opening polymerization catalyst, is normally used alone but, in some cases, an open-chain carboxylic acid anhydride or similar compound may be added.

The amount of ring-opening polymerization catalyst employed in the process of the present invention is not critical and may vary over a wide range, although the amount chosen is generally determined having regard to the intended molecular weight of the PTMG-type polyether glycol to be produced and on the type of catalyst employed. Where the catalyst comprises fuming sulphuric acid, the fuming sulphuric acid is preferably used in an amount of from 10 to 40 parts by weight per 100 parts by weight of monomer. When a co-catalyst is used in addition to the fuming sulphuric acid, this co-catalyst is preferably employed in an amount of from 0.05 to 20 parts by weight per 100 parts by weight of fuming sulphuric acid. When the catalyst comprises fluorosulphuric acid, this is preferably used in an amount of from 1 to 20 parts by weight per 100 parts by weight of monomer. Where an open-chain carboxylic acid anhydride or similar compound is employed in addition to the fluorosulphuric acid, the amount is generally from 5 to 400 parts by weight per 100 parts by weight of fluorosulphuric acid.

The particular polymerization technique employed for the process of the invention is not critical and the polymerization may be effected, for example, as a batch or continuous process. When the polymerization is carried out as a batch process, we prefer to add the ring-opening polymerization catalyst continuously to the monomer at a suitable rate to facilitate the removal of heat of mixing. The polymerization may be effected in the presence of an inert solvent (such as cyclohexane, dichloroethane or dichloromethane), but, except in special cases, we prefer to carry out the polymerization without using any solvent.

In step (B) of the process of the invention, water or an aqueous alkaline solution is added to the polymerization product and the product is, if necessary, heated under the strongly acidic conditions prevailing to hydrolyze the product. The amount of water or aqueous alkali added is preferably such that the sulphuric acid concentration in the aqueous phase after the hydrolysis reaction is within the range of from 5 to 40% by weight. If the sulphuric acid concentration exceeds 40% by weight, there is a tendency for the equilibrium conversion in the hydrolysis reaction to be decreased and the amount of residual sulphuric acid ester groups on the polymer to increase. On the other hand, if the sulphuric acid concentration is less than 5% by weight, the rate of the hydrolysis reaction is rather low and a long period of time and a large quantity of water are required for the hydrolysis. Since the majority of the sulphuric acid ester groups at the ends of the polyether are hydrolyzed by the treatment to form sulphuric acid, the sulphuric acid concentration in the aqueous phase after the treatment is substantially equal to the amount of sulphuric acid produced from the reaction between water and the fuming sulphuric acid and/or fluorosulphuric acid used in the polymerization, as shown by the following reaction equations:

$$H_2SO_4 . xSO_3 + xH_2O \rightarrow (1+x)H_2SO_4$$

$$FSO_3H + H_2O \rightarrow H_2SO_4 + HF$$

Accordingly, the sulphuric acid concentration can be calculated from the amount of fuming sulphuric acid and/or fluorosulphuric acid used and, if an alkali is added, by deducting the amount of sulphuric acid neutralized with the alkali from this amount.

The hydrolysis may be accomplished simply by adding water to the polymerization product but, when using fuming sulphuric acid as the polymerization catalyst, particularly for the production of low molecular weight PTMG-type polyether glycols, a large amount of fuming sulphuric acid must be used and, as a rseult, it is necessary to use an extremely large quantity of water for the hydrolysis. In this case, in particular, it is recommended that an alkali should be added with the water, so as to neutralize part of the sulphuric acid; the amount of water can then be reduced substantially and the amount of PTMG-type

polyether glycol dissolved in the aqueous phase is also reduced. Suitable alkalis include hydroxides and oxides of alkali metals or alkaline earth metals or of ammonia, an alkali metal oxide or hydroxide being preferred. The amount of alkali used is preferably not less than one quarter of the amount required to neutralize the mixture of water and fuming sulphuric acid and/or fluorosulphuric acid, and is preferably such that the hydrolysis reaction system remains as strongly acidic as possible, e.g. a pH value of 3 or less, preferably 1 or less. The whole of this alkali may be added prior to the hydrolysis reaction, or it may be added stepwise or continuously during the hydrolysis reaction. This method not only allows quick and complete hydrolysis of the polyether terminal groups without adding large amounts of water but also greatly reduces the amount of the PTMG-type polyether glycol dissolved in the acidic aqueous solution, whilst maintaining the acidity necessary to allow the hydrolysis to proceed.

The temperature at which the hydrolysis is carried out is not critical, although we prefer that the temperature should not be less than 50°C, more preferably from 50°C to 150°C. If the temperature is less than 50°C, the rate of the hydrolysis reaction is reduced, which prolongs the time rqeuired and also makes layer separation after the hydrolysis difficult, particularly when producing a PTMG-type polyether glycol having a molecular weight of 2,000 or more. On the other hand, if the temperature of the hydrolysis reaction exceeds 150°C, decomposition or deterioration of the PTMG-type polyether glycol tends to occur during hydrolysis and also the corrosive action of sulphuric acid or hydrogen fluoride is intensified, making it necessary to use a very costly acid-resistant material for the reactor. The most preferred temperature for the hydrolysis reaction is within the range of from 60 to 120°C. The temperature may be kept constant throughout the hydrolysis reaction, or the temperature may be raised or lowered stepwise or continuously as the hydrolysis reaction proceeds. The time required for the hydrolysis is not critical and may vary depending upon the temperature, the sulphuric acid concentration and the molecular weight of the PTMG-type polyether glycol; under the preferred conditions described above, the hydrolysis will normally take from 1 to 10 hours. The hydrolysis may be effected in a batchwise or continuous fashion, this not being a critical feature of the present invention. It is preferred to stir the hydrolysis reaction system during the reaction, since the polymerization product and the aqueous solution undergo phase separation in the course of the hydrolysis system, which renders the system heterogeneous.

The terminal sulphuric acid ester groups on the PTMG-type polyether glycol are converted into hydroxy groups by this hydrolysis reaction and, in order to minimize the amount of PTMG-type polyether glycol dissolved or emulsified in the washings in step (C) it is preferred that the amount of residual sulphuric acid ester groups be kept not more than 100 ppm, in terms of $SO_4$, based on the weight of the PTMG-type polyether glycol.

In order to minimize the time required to separate the PTMG-type polyether glycol layer and the aqueous layer after washing, the quantity of residual sulphuric acid ester groups should preferably be kept not more than 20 ppm.

The amount of residual sulphuric acid ester groups in the PTMG-type polyether glycol may be minimized by one of the following ways of carrying out the hydrolysis reaction, although, of course, other hydrolysis techniques may be used:

(i) water is added to the polymerization product in such an amount that the sulphuric acid concentration in the aqueous layer after hydrolysis is within the range of from 10 to 40% by weight, the resulting mixture is heated, with stirring, at a temperature of from 60 to 120°C for a period of from 2 to 5 hours to hydrolyze the product, the hydrolysis mixture is allowed to stand to let the layers separate, the aqueous layer is withdrawn and water is added thereto in an amount of 50—200 parts by weight per 100 parts by weight of the polymer together with sulphuric acid or a part of a previously withdrawn aqueous layer in an amount sufficient to give a sulphuric acid content of 1% by weight based on the weight of the water, and the resulting mixture is heated, with stirring, at a temperature of from 80 to 120°C for a period of from 2 to 5 hours.

(ii) Water is added to the polymerization product and the resulting mixture is heated and stirred under the same conditions as in (i) above, to hydrolyze the polymerization product to a certain degree; sodium hydroxide or an aqueous solution thereof is then added in an amount sufficient to neutralize approximately 90% of the sulphuric acid, after which the mixture is heated, with stirring, under the same conditions.

(iii) Water is added to the polymerization product in such an amount that the acid concentration becomes 50% by weight or less; an aqueous solution of sodium hydroxide is added in an amount sufficient to neutralize from 80 to 95% of the sulphuric acid, the addition taking place continuously over a period of from 1 to 3 hours, whilst hydrolyzing a part of the polymerization product by heating the system, with stirring, at a temperature of from 60 to 120°C; the system is then heated, with stirring, for a further 1 to 5 hours after completion of the addition to complete the hydrolysis.

If an antioxidant, for example a phenolic or amine-type antioxidant, is added to the polymerization product prior to hydrolysis, it is possible to prevent the colouration which may otherwise occur when the PTMG-type polyether glycol thus produced is reacted with a diisocyanate to form a polyurethane. The polymerization product contains some unreacted monomer. This unreacted monomer may be recovered by suitable means (for example distillation) prior to hydrolysis although, in this case, it is preferred that the unreacted monomer is recovered by distillation while conducting the hydrolysis. Usually, after the hydrolysis, the aqueous layer and the PTMG-type polyether glycol layer are separated by suitable means (for example by allowing the mixture to stand or by subjecting it to centrifugation) and the separated

aqueous phase is withdrawn. The temperature at which the separation of the phases takes place is not critical, although a high temperature is preferred, since this allows for easier separation of the layers and because the solubility of the PTMG-type polyether glycol in the aqueous layer is smaller at higher temperatures. It is most preferred to separate the layers at the hydrolysis temperature. However, if, as is explained hereafter, the washing in step (C) employs a basic magnesium compound, it is not necessary to withdraw the aqueous layer after hydrolysis and the whole system, including the aqueous layer to which the basic magnesium compound is added, may be washed as it is.

After the separation of the aqueous layer from the PTMG-type polyether glycol and the withdrawal of the aqueous layer, the acid in the PTMG-type polyether glycol is removed by washing. The method of washing to remove the acid is not critical and may be achieved by, for example, neutralizing the PTMG-type polyether glycol layer with a solid alkali, removing the salt thus produced and the solid alkali by filtration and then removing the volatile matter by evaporation under reduced pressure.

It is, however, important that the PTMG-type polyether glycol should be substantially free from terminal sulphuric acid ester groups (which are produced during the polymerization) and from free acids produced during the hydrolysis, in other words, the residual acid content is very important. If the residual acid content is too high, the PTMG-type polyether glycol will decompose upon heating and reactions to produce urethanes and esters are hindered, giving rise to undesirable side reactions and preventing the production of polyurethanes, elastomeric polyesters or elastomeric polyamides having satisfactory physical properties.

A preferred washing method for removing such terminal sulphuric acid ester groups or residual acid comprises washing the PTMG-type polyether glycol with a neutral aqueous sulphate solution or an aqueous solution of a basic magnesium compound. Where a neutral sulphate solution is employed, the neutral sulphate should be such that the aqueous solution of it is neutral and its solubility in water at the temperature of the treatment is at least 5% by weight. Suitable neutral sulphates, from the point of view of easy availability, low cost and quality of the waste water, are sodium sulphate, potassium sulphate and magnesium sulphate. The quantity of sulphate solution used is preferably from 20 to 200 parts by weight per 100 parts by weight of the PTMG-type polyether glycol. The sulphate solution may have been freshly prepared for this purpose, but it is also possible to use the whole or part of the aqueous layer withdrawn after the hydrolysis in step (B), provided that this has been neutralized precisely to neutrality with an alkali and its concentration properly adjusted. Accordingly, when an alkali is added during the hydrolysis in step (B) it is convenient to use an alkali capable of forming a water-soluble neutral sulphate and to neutralize the withdrawn aqueous layer with the same alkali. The washing treatment with such a neutral sulphate solution is preferably effected whilst heating the system to a temperature of at least 50°C, since, if the washing is effected at a temperature less than 50°C, separation of layers after the treatment is difficult, particularly when producing PTMG-type polyether glycols having molecular weights in excess of 2,000. In addition, it is then difficult to reduce adequately the amounts of residual sulphuric ester groups and residual acid. However, in order to minimize the corrosion of apparatus, as discussed in relation to step (B), and autogenous pressure, the treatment is preferably conducted at a temperature not exceeding 150°C, preferably not exceeding 120°C.

The temperature may be maintained constant throughout the washing or it may be varied and the time required for the washing may vary over a wide range depending upon various conditions (particularly temperature), although a period of from 0.5 to 5 hours normally suffices. Various techniques, for example batch or continuous treatment, may be used for the washing and the apparatus employed may also vary, corresponding to the particular technique used. In any case, it is desirable to stir the system during the washing.

The amounts of residual sulphuric ester groups and residual acid can be reduced to a very low level by one washing with a neutral sulphate solution but, if necessary, this washing may be repeated two or more times in order to reduce the amounts of residual sulphuric ester groups and residual acid effectively to zero. Where multiple washings are employed with a batch technique, the aqueous layer separated after the washing may be used as the solution for the subsequent washing stage after it has been neutralized precisely to neutrality with an alkali. In the case of a continuous washing treatment, the aqueous layer separated after washing may be supplied, as it is, to a preceding stage in a countercurrent contact operation. Also, the aqueous layer withdrawn from the first stage may be supplied as the washing solution to the last stage after precisely neutralizing it with alkali and properly adjusting its concentration and amount, thus enabling the majority of the washing solution to be recycled. By employing any of these methods, it is possible greatly to reduce the amount of neutral sulphate used. However, it will be appreciated that various other washing techniques can also be employed, with advantage.

When using a solution of a basic magnesium compound as the washing solution, the magnesium compound may be, for example, magnesium hydroxide, magnesium oxide, magnesium carbonate, basic magnesium carbonate or a mixture thereof. Usually, these basic magnesium compounds have a low water solubility and so, when only a small quantity of the compound is used, it may be used in the form of an aqueous solution but when a large quantity is used, it may be used in the form of a suspension. The solubility of such magnesium salts as magnesium carbonate or basic magnesium carbonate can be appreciably increased by blowing carbon dioxide gas into the aqueous solution and the resulting solution can be used in the washing step (C) of the process of the invention. The basic magnesium compound may

be dissolved or suspended in water alone but, particularly when producing low molecular weight PTMG-type polyether glycols, the magnesium compound is preferably dissolved or suspended in an aqueous solution of a suitable neutral salt, in order to reduce losses of the polyether glycol by dissolution in the aquous washing solution. A variety of neutral salts may be used, but the neutral sulphates discussed above are most preferred.

When using a basic magnesium compound in the washing step, it is, of course, possible to add water or a neutral salt solution to the unwashed PTMG-type polyether glycol and then add a solid basic magnesium compound to the resulting mixture. It is desirable to use the basic magnesium compound in an amount exceeding the quantity of residual acid in the system, so that the pH of the system always remains at a value of 7 or more. If the pH of the system is reduced to less than 7 in the course of the washing because of the use of too small an amount of basic magnesium compound, it becomes difficult to remove the residual acid with certainty from the system.

Washing with the solution of the basic magnesium compound may be accomplished by separating the layers in the system after hydrolysis, withdrawing the aqueous layer and then adding water containing the basic magnesium compound or an aqueous solution of a neutral salt containing the basic magnesium compound to the layer containing the PTMG-type polyether glycol. However, in a preferred embodiment of the process of the invention, the washing step (C) is carried out by directly adding an excess of the basic magnesium compound (i.e. an amount sufficient to keep the pH of the system above 7) without first withdrawing the aqueous layer after hydrolysis. In this case, the aqueous layer immediately after hydrolysis contains a relatively large amount of residual acid, but it is not always necessary to neutralize the whole of this residual acid. It is possible first to partially neutralize the aqueous layer with other alkaline compounds (such as sodium hydroxide, potassium hydroxide, sodium carbonate or sodium bicarbonate) to such a degree that the pH of the aqueous layer remains below 7, and then add just sufficient of the basic magnesium compound to keep the pH of the system above 7. Where an alkali has been used during the hydrolysis in step (B) to neutralize part of the sulphuric acid, subsequent neutralization of the aqueous layer is conveniently effected with the same alkali. It is, of course, possible to use a basic magnesium compound as the alkali for neutralization in the hydrolysis in step (B). By neutralizing the aqueous layer in this way, a neutral sulphate is produced in the aqueous layer, thus reducing considerably the loss of PTMG-type polyether glycol, particularly in the production of low molecular weight PTMG-type polyether glycols, by dissolution in the aqueous layer. The basic magnesium compound may be used in a large excess, but, in this case, part of the magnesium compound remains undissolved because of its low solubility, thus rather complicating the operation. However, even in this case, the solids of the remaining basic magnesium compound can easily be separated from the PTMG-type polyether glycol by conventional techniques such as filtration.

The amount of water containing a basic magnesium compound or of an aqueous solution of a neutral salt containing the basic magnesium compound employed for this washing is preferably from 10 to 500 parts by weight, more preferably from 20 to 200 parts by weight, per 100 parts by weight of the PTMG-type polyether glycol. The temperature, time and techniques employed when using such a basic magnesium compound are the same as discussed above in relation to the use of a neutral sulphate solution.

Particularly when carrying out the washing of step (C) using a neutral sulphate solution, the hydrolysis of the polymerization product in step (B) can be carried out in a region of a high sulphuric acid concentration in the aqueous layer, so that it is possible to decrease the amount of water added during the hydrolysis and there is also no need to use a large scale hydrolysis reactor. Furthermore, loss of the PTMG-type polyether glycol by dissolution in the aqueous layer is reduced.

Also, when using a basic magnesium compound in step (C), there is no need to withdraw the aqueous layer after hydrolysis but the basic magnesium compound may simply be added to the aqueous layer and the resulting mixture then subjected to washing. This eliminates the troublesome operations of separation of the aqueous layer and adjustment of the basic magnesium compound solution.

Whichever washing method is employed in step (C), an alkali in an amount sufficient to neutralize part of the sulphuric acid is preferably added, along with the water, in the hydrolysis in step (B), thereby further reducing the amount of water needed whilst also decreasing the amount of residual sulphuric ester groups. Particularly when a low molecular weight PTMG-type polyether glycol having a molecular weight of 1,000 or less is produced, this also minimizes the loss of polyether glycol by dissolution in the aqueous layer. Furthermore, such a solution permits very efficient extraction of the residual acid, which is difficult to extract simply with water, and the residual acid content can be reduced nearly to zero by repeating the washing several times. Also, separation of layers after the treatment is very much facilitated and dissolution of the PTMG-type polyether glycol in the aqueous layer during washing is minimized.

After completion of the washing, the aqueous layer and the layer containing the PTMG-type polyether glycol are separated in a known manner, for example by allowing the mixture to stand by or subjecting it to centrifugation, and the aqueous layer is then withdrawn. As in the case of step (B), separation of these layers is preferably conducted at a relatively high temperature.

Since the PTMG-type polyether glycol thus obtained contains a fairly large quantity of water, this and other volatile materials are preferably removed by suitable treatment, for example by heating under normal or reduced pressure. Various devices, such as a rotary evaporator or a thin-film evaporator, may be used for this purpose. Removal of water may be facilitated by the addition of a small quantity of a low

boiling point solvent capable of forming an azeotropic mixture with water, prior to evaporation of the water and drying of the resulting polyether glycol. In order to prevent decomposition or deterioration of the PTMG-type polyether glycol, removal of volatile materials is preferably conducted under reduced pressure, since this enables lower temperatures to be used.

The resulting PTMG-type polyether glycol may then be used immediately as a starting material for the preparation of polyurethanes or similar polymers, but it is preferably first filtered with a suitable filter in order to eliminate solid impurities. By conducting this filtration after complete removal of water and volatile material, it is possible to prevent the PTMG-type polyether glycol from being contaminated by the neutral sulphate or basic magnesium compound, even where the separation of layers after the washing treatment was incomplete. This filtration is preferably conducted at a relatively high temperature (e.g. from 60 to 120°C) in order to reduce the viscosity of the polyether glycol and facilitate filtration.

The invention is further illustrated by the following non-limiting Examples. The number-average molecular weights given in the Examples were measured using a vapour pressure osmometer and the hydroxyl number (mg of KOH equivalent to the hydroxy groups in 1 g of polymer) and the acid number were determined by analysis according to the method of JIS (Japanese Industrial Standard) K-1557/1970.

Example 1

A four-necked, separable flask having an internal volume of 1.2 litres and provided with a Teflon ("Teflon" is a trade mark) stirrer, a dropping funnel, a thermometer and a three-way cock was dried in vacuo and then purged with nitrogen gas, after which 500 g of tetrahydrofuran (which had previously been dehydrated by means of a molecular sieve to a water content of 80 ppm) were placed in the flask and cooled to −20°C. 100 g of fuming sulphuric acid having a free $SO_3$ concentration of 25% by weight (hereinafter referred to as "25% fuming sulphuric acid") were then dropped from the dropping funnel over a period of 40 minutes into the tetrahydrofuran, with stirring. Whilst this acid was being dropped into the tetrahydrofuran, the reaction mixture was cooled, so that its temperature was maintained at −20°C±2°C. After completion of this dropwise addition, the mixture was stirred and allowed to react at −20°C for a further 2 hours. At the end of this time, a part of the reaction solution was sampled and the amount of unreacted tetrahydrofuran was measured by gas chromatography, which revealed that the percentage conversion was 32%.

The reaction mixture was then heated to 10°C and reacted, with stirring, for a further 2 hours. The reaction mixture remained colourless throughout the reaction and the reaction system did not solidify but maintained a homogeneous liquid state. The percentage conversion was then determined by the same method as above to be 58%.

After completion of the reaction, 420 g of ion-exchanged water were added, with stirring, to terminate the reaction. The reaction mixture was then charged into a 2 litre, three-necked, separable flask provided with a Teflon stirrer and a distillation column and the flask was heated over an oil bath, with stirring, for 2 hours at 95°C to hydrolyze the terminal groups of the polymerization product, whilst recovering the unreacted tetrahydrofuran by distillation. After completion of the hydrolysis, stirring was stopped and the reaction mixture was allowed to stand at room temperature to cool. The separated aqueous layer was withdrawn; to the remaining oily layer were added 600 g of toluene and 3 g of calcium hydroxide, and the resulting mixture was stirred at room temperature for 1 hour. The mixture was then placed in a rotary evaporator to remove by distillation under reduced pressure at about 60°C a part of the toluene together with the residual water. The solids were then removed by filtration and the residue was again placed in the rotary evaporator to distil off volatile materials, thus giving a colourless PTMG. This product had a number-average molecular weight of 1000 and a hydroxyl number of 112, and the functionality calculated therefrom was 2.0. The catalytic efficiency α, as calculated from the following equation, was 0.93:

$$\alpha = \frac{\text{(Number of moles of PTMG-type polyether glycol molecules)}}{\text{(Number of moles of } SO_3 \text{ in fuming sulphuric acid used)}}$$

$$= \frac{\text{(Amount of monomer used)} \times \text{(Conversion)} \times 80}{\text{(Amount of fuming sulphuric acid used)} \times 25 \times \text{(Number-average molecular weight of PTMG type polyether glycol)}}$$

Meanwhile, the separated aqueous layer was charged into a 1 litre beaker and neutralized by the addition of sodium hydroxide pellets until it achieved a pH value of 7; the resulting aqueous solution was then evaporated to dryness by means of a rotary evaporator. To the residue were added 300 ml of chloroform, and the resulting mixture was thoroughly stirred, after which the solids were removed by

filtration and the filtrate was distilled under reduced pressure to remove the chloroform. This sequence of steps enabled the residual PTMG to be recovered from the aqueous solution. The amount of PTMG recovered was 19.4 g (6.7% of the amount of PTMG formed, which was calculated from the conversion).

Example 2

500 g of tetrahydrofuran were placed in the reaction apparatus described in Example 1. Meanwhile, a solution was prepared by dissolving 0.75 g of sodium borofluoride in 105 g of 25% fuming sulphuric acid. This solution was added dropwise to the tetrahydrofuran over a period of 40 minutes, whilst maintaining the temperature of the contents of the flask at −10°C. After completion of the dropwise addition, the mixture was allowed to react for a further 1 hour at −10°C. The conversion of tetrahydrofuran at this stage was 40%.

The reaction mixture was then heated to 30°C and allowed to react at this temperature for 2 hours, whereupon the conversion reached 55%. No solidification or colouration of the reaction system was observed during the course of the reaction.

The polymerisation product was then treated as described in Example 1, to give a colourless PTMG; the results of the analyses of this product and the catalytic efficiency, α, are shown in Table 1.

PTMG was also recovered from the aqueous solution as described in Example 1; the amount of recovered PTMG was 7.0% of the total PTMG formed, as calculated from the conversion.

Example 3

500 g of tetrahydrofuran were charged into the reaction apparatus described in Example 1, and then 150 g of 25% fuming sulphuric acid were added dropwise over a period of 1 hour to this tetrahydrofuran, whilst maintaining the contents of the flask at −20°C. After completion of the dropwise addition, the mixture was allowed to react at −20°C for a further 10 minutes. The conversion at this point was 14%.

The reaction temperature was then raised to 30°C and the reaction was continued at this temperature for a further 1 hour. The conversion at the end of this reaction was 47%. No solidification or colouration of the reaction system was observed throughout the course of the reaction.

180 g of ion-exchanged water were then added, with thorough stirring, to the reaction mixture to terminate the reaction, after which 145 g of a 45% by weight aqueous solution of sodium hydroxide were added to neutralize part of the sulphuric acid. The dropping funnel in the flask was then replaced by a distillation column, and the reaction mixture was heated over an oil bath at 95°C for 2 hours to hydrolyze the terminal groups of the polymerization product, whilst distilling off unreacted tetrahydrofuran. After completion of the reaction, the reaction mixture was allowed to stand at room temperature to cool. An aqueous layer separated and was withdrawn, whilst the residual oily layer was treated as described in Example 1, to give a colourless liquid PTMG. The analyses of this product and the catalytic efficiency, α, are shown in Table 1.

PTMG was also recovered from the aqueous solution as described in Example 1; the amount recovered was 2.1% of the total amount of PTMG formed, which was calculated from the conversion.

Example 4

250 g of tetrahydrofuran were charged into a 600 litre four-necked, separable flask, which had been prepared in a similar manner to that described in Example 1. To this tetrahydrofuran were added dropwise over a period of 30 minutes a solution prepared by dissolving 0.75 g of sodium borofluoride in 27.5 g of 25% fuming sulphuric acid, whilst keeping the temperature of the contents of the flask at −10°C. After completion of the dropwise addition, the mixture was allowed to react for a further 2 hours at −10°C. The conversion at this point was 37%.

The reaction mixture was then heated to 30°C and allowed to react at this temperature for 2 hours. The conversion at this point was 59%. No solidification or colouration of the reaction system were observed during the course of the reaction.

After completion of the reaction, the reaction mixture was stirred and 195 g of ion-exchanged water were added to terminate the reaction. The mixture was then treated as described in Example 1, to give a colourless semi-solid PTMG. The results of the analyses of this product and the catalytic efficiency, α, are shown in Table 1.

PTMG was also recovered from the aqueous solution as described in Example 1; the amount recovered was 1.1% of the total PTMG formed, calculated from the conversion.

Example 5

250 g of tetrahydrofuran were charged into the apparatus described in Example 1. To this was added dropwise, over a period of 30 minutes, a solution prepared by dissolving 0.75 g of sodium borofluoride in 27.5 g of 25% fuming sulphuric acid; the contents of the flask were kept at −20°C throughout this addition. When the dropwise addition was complete, the reaction mixture was allowed to react for a further 2 hours at −20°C. The conversion at this point was 19%.

The reaction mixture was then heated to 10°C and allowed to react at this temperature for 2 hours. The final conversion at this point was 69%. No solidification or colouration of the reaction mixture were observed throughout the course of the reaction. The reaction mixture was then treated as described in

Example 1, to give a colourless, semi-solid PTMG. The results of the analyses of this and the catalytic efficiency, α, are shown in Table 1.

Example 6

500 g of tetrahydrofuran were charged into the reaction apparatus described in Example 1. Meanwhile, a solution was prepared by dissolving 0.82 g of potassium borofluoride in 105 g of 25% fuming sulphuric acid. This solution was then added dropwise to the tetrahydrofuran over a period of 40 minutes, whilst maintaining the contents of the flask at −10°C. The mixture was then allowed to react at −10°C for a further 1 hour. The conversion at the end of this reaction was 38%.

The reaction mixture was then heated to 10°C and allowed to react at this temperature for 2 hours. The conversion at the end of this reaction was 60%. No solidification or colouration of the reaction system were observed during the reaction. The polymerization product was then treated as described in Example 1, to give a colourless PTMG. The results of its analyses and the catalytic efficiency, α, are shown in Table 1.

Comparative Example 1

The procedure described in Example 1 was repeated, except that the temperature during the dropwise addition of fuming sulphuric acid was kept at 10°C and that, when the dropwise addition was complete, the mixture was allowed to react at the same temperature for 4 hours. The PTMG thus obtained was a light yellow liquid, and the results of its analyses and the catalytic efficiency, α, are shown in Table 1. The product and process of Example 1 are clearly superior to those of this Comparative Example.

Comparative Example 2

The procedure described in Example 1 was repeated except that, at the end of the first stage reaction, the mixture was not heated and the reaction was allowed to proceed for a further 4 hours at −20°C. The resulting polymerization mixture was wax-like and extremely difficult to stir. The final conversion was 45%. A colourless PTMG was recovered following the procedure described in Example 1 and the results of its analyses and the catalytic efficiency, α, are shown in Table 1.

Comparative Example 3

500 g of tetrahydrofuran were charged into the reaction apparatus described in Example 1. 150 g of 25% fuming sulphuric acid were added dropwise over a period of 1 hour, whilst the contents of the flask were maintained at 0°C. The mixture was then allowed to react at 0°C for a further 2 hours. The reaction mixture remained liquid even after completion of the reaction, and the conversion was 68%. This reaction mixture was then treated as described in Example 1, except that 630 g of ion-exchanged water were added, to give a colourless PTMG.

The results of the analyses of this PTMG and the catalytic efficiency, α, are shown in Table 1, which indicates a far lower catalyst utilization efficiency than is achieved in the process of the present invention.

In the hope of obtaining a PTMG having a molecular weight of around 650 by this method, various experiments were carried out in which the amount of fuming sulphuric acid used, the $SO_3$ concentration, the rate of dropping fuming sulphuric acid and the polymerization time after dropping were all changed, but all of the resulting PTMG's had a molecular weight above 850 and it was found to be impossible to obtain a PTMG having a molecular weight of around 650.

Comparative Example 4

The procedure described in Example 3 was repeated except that, at the end of the first stage reaction, the reaction temperature was not raised and the reaction was allowed to continue for a further 3 hours at −20°C. The reaction system partly solidified and became a turbid white at the end of this reaction. The final conversion was 58%. The PTMG obtained was colourless and the results of its analyses and the catalytic efficiency, α, are shown in Table 1.

Comparative Example 5

The procedure described in Example 3 was repeated, except that the temperature during the dropping of the fuming sulphuric acid was maintained at 30°C and that the reaction was then continued at the same temperature for a further 2 hours. It was difficult to control the temperature of the reaction mixture because of the generation of heat whilst the fuming sulphuric acid was being added and the reaction mixture became yellow about 5 minutes after we had begun to add the fuming sulphuric acid; by the time all of the fuming sulphuric acid had been added, the reaction mixture was brown. The PTMG obtained was also brown and the results of its analyses and the catalytic efficiency, α, are as shown in Table 1.

Comparative Example 6

Using the same reaction apparatus as is described in Example 4, a mixture of 50 g of 25% fuming sulphuric acid and 1.75 g of sodium borofluoride was added dropwise to 250 g of tetrahydrofuran at 0°C over a period of 1 hour; they were then allowed to react at the same temperature for 2 hours. The final conversion was 66%, and the reaction system had solidified to form a wax-like mass. This product was then

treated in a similar manner to that described in Example 4, to give a colourless PTMG. The results of the analyses of the PTMG so obtained and the catalytic efficiency, α, are shown in Table 1.

Comparative Example 7

The experiment described in Example 4 was repeated, except that heating was not carried out after completion of the first-stage reaction and the reaction was continued at −10°C. About 5 hours after completion of the dropwise addition, the reaction system had solidified to form a wax-like mass and stirring was not possible. The reaction was stopped at this point, and the resulting PTMG was recovered as described in Example 4. The results of the analyses of the PTMG so obtained and the catalytic efficiency, α, are shown in Table 1.

Comparative Example 8

The experiment described in Example 4 was repeated, except that the temperature of the tetrahydrofuran was maintained at 30°C during the dropwise addition of the fuming sulphuric acid, and the reaction was continued at this temperature for 4 hours. The experimental procedures were otherwise the same as in Example 4. The final conversion was 30% and the recovered PTMG was light brown in colour. The results of its analyses and the catalytic efficiency, α, are shown in Table 1.

Comparative Example 9

The experiment described in Example 5 was repeated, except that the first stage reaction time was 30 minutes after completion of the dropwise addition and the second stage reaction time was 2.5 hours. The conversion at the end of the first stage reaction was 1.5% and the final conversion was 63%. The results of the analyses of the resulting product and the catalytic efficiency α, are shown in Table 1. The results show almost no increase in catalytic efficiency if the conversion in the first-stage reaction is less than 5%.

Comparative Example 10

The procedure described in Example 1 was repeated, except that the temperature during the dropwise addition of the catalyst and the reaction temperature in the first stage reaction were maintained at 5°C; the experiment was otherwise carried out under the same conditions as in Example 1. The final conversion was 46% and the results of the analyses of the thus obtained colourless PTMG and the catalytic efficiency, α, are shown in Table 1. The results show that substantially no increase in catalytic efficiency is obtained if the difference in temperature between the first and second stages is less than 10°C.

TABLE 1

| | PTMG Analytical results | | | Catalytic efficiency | Colour tone of PTMG |
|---|---|---|---|---|---|
| | Number-average molecular weight | Hydroxyl number | Functionality | | |
| Example 1 | 1,000 | 112 | 2.0 | 0.93 | Colourless |
| Example 2 | 970 | 116 | 2.0 | 0.86 | Colourless |
| Example 3 | 580 | 193 | 2.0 | 0.87 | Colourless |
| Example 4 | 1,830 | 61 | 2.0 | 0.94 | Colourless |
| Example 5 | 2,380 | 47 | 2.0 | 0.84 | Colourless |
| Example 6 | 1,090 | 103 | 2.0 | 0.87 | Colourless |
| Comp. Ex. 1 | 970 | 116 | 2.0 | 0.73 | Light-yellow |
| Comp. Ex. 2 | 1,180 | 95 | 2.0 | 0.61 | Colourless |
| Comp. Ex. 3 | 1,050 | 107 | 2.0 | 0.69 | Colourless |
| Comp. Ex. 4 | 1,040 | 108 | 2.0 | 0.59 | Colourless |
| Comp. Ex. 5 | 910 | 123 | 2.0 | 0.49 | Brown |
| Comp. Ex. 6 | 1,080 | 104 | 2.0 | 0.85 | Colourless |
| Comp. Ex. 7 | 2,520 | 45 | 2.0 | 0.60 | Colourless |
| Comp. Ex. 8 | 1,390 | 81 | 2.0 | 0.63 | Light-brown |
| Comp. Ex. 9 | 2,450 | 46 | 2.0 | 0.75 | Colourless |
| Comp. Ex. 10 | 970 | 116 | 2.0 | 0.76 | Colourless |

Example 7

250 g of tetrahydrofuran were charged into reaction apparatus of the same type as was used in Example 4. Meanwhile, whilst maintaining the temperature of the tetrahydrofuran at 0°C, 20 g of fluorosulphuric acid were added dropwise over a period of 30 minutes, and then the mixture was allowed to react at 0°C for 1 hour. The reaction temperature was then raised to 20°C and the mixture was allowed to react at this temperature for a further 5 hours. The conversion at the end of the first-stage reaction was 18% and the final conversion was 72%. No solidification or colouration of the reaction system were observed throughout the reaction. At the end of the reaction, the mixture was stirred and 135 g of ion-exchanged water were added thereto. The resulting mixture was then treated as described in Example 4, to recover a colourless PTMG. This product had a number-average molecular weight of 1880, a hydroxyl number of 60 and a functionality of 2.0. The catalytic efficiency, β, as calculated from the following equation was 0.96:

$$\beta = \frac{\text{(Number of moles of PTMG-type polyether glycol molecules)}}{\text{(Number of moles of fluorosulphuric acid used)}} \times 2$$

$$= \frac{\text{(Amount of monomer used)} \times \text{(Conversion)}}{\text{(Amount of fluorosulphuric acid used)} \times \text{(Number-average molecular weight of PTMG-type polyether glycol)}} \times 2$$

The weight of PTMG recovered from the aqueous solution, in a manner described in Example 1, was 1.2% of the total amount of PTMG formed, which was calculated from the conversion.

Example 8

The procedure described in Example 1 was repeated, except that a mixture consisting of 225 g of tetrahydrofuran and 25 g of 3,3-dimethyloxacyclobutane was used as the monomer. The conversion at the end of the first stage reaction was 40% and the final conversion was 64%. No solidification or colouration of the reaction system was observed during the course of the reaction. The colourless liquid polyether glycol thus obtained had a number-average molecular weight of 2050, a hydroxyl number of 54 and a functionality of 2.0. The catalytic efficiency, α, was 0.91.

Polyether glycol was also recovered from the aqueous solution, as described in Example 1; the weight recovered was 0.9% of the total weight, as calculated from the conversion.

Example 9

The procedure described in Example 7 was repeated, except that the temperature during the dropping of the fluorosulphuric acid and the reaction temperature during the first stage reaction were both 5°C and that the reaction time after the dropwise addition was complete was 40 minutes. The conversion at the end of the first stage reaction was 21% and the final conversion was 71%. No solidification or colouration of the reaction system were observed during the course of the polymerization. The number-average molecular weight of the resulting PTMG was 1900, the hydroxyl number was 59, the functionality was 2.0 and the catalytic efficiency, β, was 0.93.

Comparative Example 11

The experiment described in Example 7 was repeated, except that the heating at the end of the first stage reaction was omitted and the reaction was continued at 0°C for 5 hours. The final conversion was 68% and the reaction system had solidified by the time the reaction was complete. The reaction product was treated as described in Example 7, to recover a colourless PTMG, which had a number-average molecular weight of 2020, a hydroxyl number of 52 and a functionality of 2.0. The catalytic efficiency, β, was 0.84.

Comparative Example 12

The experiment described in Example 7 was repeated, except that the tetrahydrofuran was maintained at 20°C during the addition of the fluorosulphuric acid and these compounds were then reacted at the same temperature for 6 hours, after which they were treated as described in Example 7, to give a colourless PTMG. The final conversion was 67% and the resulting PTMG had a number-average molecular weight of 1930, a hydroxyl number of 58 and a functionality of 2.0. The catalytic efficiency, β, was 0.87.

Example 10

Polymerization was conducted under the same conditions as described in Example 1; at the end of the polymerization, the dropping funnel was replaced by a distillation column, and then a solution prepared by

dissolving 43 g of sodium hydroxide in 210 g of water was added to the contents of the apparatus, with vigorous stirring. The amount of sodium hydroxide used gave a neutralization rate of 50% and an effective sulphuric acid concentration of 20% in the reaction mixture after its addition. The mixture was then heated, with stirring, over an oil bath at 95°C for 2 hours to conduct the hydrolysis reaction, whilst recovering unreacted tetrahydrofuran which distilled off. After the reaction, the stirring was stopped and the reaction mixture was allowed to stand at room temperature to cool, whereupon the mixture separated into two layers. These were then treated as described in Example 1 to recover PTMG from both the oil layer and the aqueous layer. The PTMG recovered from the oil layer had number-average molecular weight of 960, a hydroxyl number of 117 and a functionality of 2.0. The amount of PTMG recovered from the aqueous layer was 0.8% of the total amount of PTMG formed, calculated from the conversion.

Example 11

Polymerization was carried out under the conditions described in Example 2, and then the resulting product was treated as described in Example 10. The PTMG recovered from the oil layer had a number-average molecular weight of 930 and a hydroxyl number of 121. The amount of PTMG recovered from the aqueous solution was 0.7% of the total PTMG formed, calculated from the conversion.

Example 12

Polymerization was conducted under the same conditions as described in Example 4. At the end of the polymerization, the dropping funnel was replaced by a distillation column, and then 250 g of ion-exchanged water and 25 g of a 48% by weight aqueous solution of sodium hydroxide were added. The mixture was then treated as described in Example 10. The PTMG recovered from the oil layer had a number-average molecular weight of 1840 and a hydroxyl number of 61. The amount of PTMG recovered from the aqueous solution was 0.1% of the total PTMG formed, calculated from the conversion.

Example 13

Polymerization was conducted under the same conditions as described in Example 7. After completion of the polymerization, 100 g of ion-exchanged water and 25 g of a 48% by weight aqueous solution of sodium hydroxide were added, and then the reaction mixture was treated as described in Example 10. The results of the analyses of the PTMG recovered from the oil layer were the same as those in Example 7. The amount of PTMG recovered from the aqueous solution was 0.1% of the total PTMG formed, calculated from the conversion.

Example 14

Polymerization was conducted under the same conditions as described in Example 8. When the polymerization was complete, 250 g of ion-exchanged water and 25 g of a 48% by weight aqueous solution of sodium hydroxide were added, and then the mixture was treated as described in Example 10. The results of the analyses of the PTMG recovered from the oil layer were identical with those of Example 8. The amount of PTMG recovered from the aqueous solution was 0.1% of the total PTMG formed, calculated from the conversion.

Example 15

A four-necked separable flask having an internal capacity of 2 litres and equipped with a glass stirrer, a dropping funnel, a thermometer and a three-way cock was dried in vacuo and then filled with dry nitrogen gas. Into this flask were then placed 600 g of tetrahydrofuran, which had been distilled, dehydrated and cooled to −10°C. 66 g of 25% fuming sulphuric acid in which had been dissolved 1.8 g of sodium borofluoride were then added dropwise from the dropping funnel to the tetrahydrofuran, with stirring, over a period of 30 minutes. During this dropwise addition, the cooling was controlled to maintain an internal temperature of −10°C. After completion of the dropwise addition, the mixture was allowed to react at −10°C for a further 1 hour. At this point, the conversion was determined and found to be 21%.

The reaction mixture was then heated to 20°C and allowed to react at this temperature for 2 hours. The final conversion was 60%. After completion of the reaction, 5 g of water were added to terminate the polymerization.

To the resulting polymerization product were added 280 g of water (reducing the sulphuric acid concentration to about 20% by weight), and then the dropping funnel was replaced by a distillation column. The flask was then immersed in an oil bath at 90°C and its contents were vigorously stirred and heated for 2 hours to hydrolyze the product, whilst recovering the unreacted tetrahydrofuran by distillation. After this treatment, stirring was stopped and the flask was allowed to stand in the oil bath. After the contents had separated completely into two layers, the aqueous layer was withdrawn. To the residual PTMG layer were added 350 g of a 20% by weight aqueous solution of sodium sulphate, and then the mixture was heated at 120°C for 2 hours, after which it was washed and unreacted tetrahydrofuran was recovered. After separating and withdrawing the aqueous layer, a further 200 g of a 20% by weight aqueous solution of sodium sulphate were added to the residue and the mixture was heated at 95°C for 2 hours and then washed. After the contents of the flask had separated completely into two layers, the aqueous layer was withdrawn and then the volatile matter was completely removed from the PTMG layer using a rotary

evaporator under reduced pressure at 80°C. The number-average molecular weight, hydroxyl number, acid number, amount of residual sulphuric ester groups and amount of residual acid matter (both determined as described below) of the resulting PTMG are shown in Table 2.

Determination of sulphuric ester groups and residual acid matter

About 5 g of a PTMG specimen was accurately weighed and put in a cell for colourimetric titration, and then 5 ml of 0.01N hydrochloric acid and 50 ml of isopropanol were added thereto to form a homogeneous solution. The sulphate ions in this solution were subjected to colourimetric titration with a 0.01N barium perchlorate solution, following the procedure of the Japan Rubber Association Standard SRIS 3401-1976, using carboxyarsenazo as indicator to determine the sulphate ion content (A ppm) in the PTMG-type polyether glycol.

Separately, another approximately 5 g of the specimen were accurately weighed and placed in a 100 ml flask provided with a reflux cooler. 5 ml of 0.01N hydrochloric acid were added thereto and the mixture was heated at 100°C, with stirring, for 2 hours. The mixture was then cooled to room temperature and the contents of the flask were transferred to a cell for colourimetric titration using 50 ml of isopropanol. The mixture was then subjected to colourimetric titration in the same way as described above, to determine the sulphate ion content (B ppm) in the PTMG-type polyether glycol.

The amount of residual sulphuric ester is given by (B-A) and the amount of residual acid matter (and salts) is given by A. The amounts of residual sulphuric ester and residual acid matter were all determined by this method in the following Examples.

Example 16

Using the same apparatus as described in Example 15, 126 g of 25% fuming sulphuric acid containing 0.9 g of sodium borofluoride were dropped from the dropping funnel into 600 g of tetrahydrofuran, with stirring, at −10°C over a period of 40 minutes. The mixture was then allowed to react at −10°C for 1 hour. The conversion at the end of this reaction was 39%.

The reaction mixture was then heated to 30°C and allowed to react at this temperature for a further 2 hours, after which 10 g of water were added to the mixture to terminate the polymerization. The final conversion was 60%.

530 g of water were then added (reducing the sulphuric acid concentration to about 20%), and then the reaction solution was heated and hydrolyzed over an oil bath at 80°C, whilst distilling off the unreacted tetrahydrofuran, in the manner described in Example 1. 204 g of a 48% by weight aqueous solution of sodium hydroxide (corresponding to a neutralization degree of 90%) were then added continuously over a period of 1 hour, whilst the internal temperature was kept at 100°C, to continue the hydrolysis. Recovery of unreacted tetrahydrofuran by distillation was continued during these operations.

Then, as in Example 1, the reaction mixture was allowed to stand to allow separation of layers, after which the aqueous layer was withdrawn. The PTMG layer was washed at 80°C for 1 hour with 350 g of a 20% by weight aqueous solution of sodium sulphate. After again separating and withdrawing the aqueous layer, the volatile matter was removed, as in the foregoing Examples, from the PTMG layer, and the residue was filtered through a 10 µm mesh membrane filter, to give the desired PTMG. The results of the analyses of this PTMG are shown in Table 2.

Example 17

Using the same reaction apparatus as is described in Example 15, 120 g of 25% fuming sulphuric acid were dropped from the dropping funnel over a period of 40 minutes into 600 g of tetrahydrofuran at −20°C, with stirring; the mixture was then allowed to react at −20°C for 2 hours. The conversion at the end of this reaction was 32%.

The internal temperature was then raised to 10°C and the mixture was allowed to react at this temperature for a further 2 hours. At the end of this time, 10 g of water were added to terminate the polymerization. The final conversion was 57%.

The dropping funnel was then replaced by a distillation column and the contents of the apparatus were stirred vigorously and mixed with a solution prepared by dissolving 52 g of sodium hydroxide in 250 g of water (neutralization degree 50%, corresponding to a sulphuric acid concentration in the mixture of 20% by weight), and the mixture was heated and hydrolyzed over an oil bath at 80°C for 2 hours, whilst recovering unreacted tetrahydrofuran.

Following the procedure described in Example 15, the reaction mixture was then allowed to stand, whereupon it separated into an aqueous layer and a PTMG layer. The aqueous layer was withdrawn and the PTMG layer was subjected twice to a heating and washing treatment at 120°C with 300 g of a 15% by weight aqueous solution of sodium sulphate. The residual unreacted tetrahydrofuran was recovered in the first treatment. The mixture was then treated as described in Example 15, and finally the reaction product was filtered through a 10 µm mesh membrane filter, to give the desired PTMG. The results of its analyses are shown in Table 2.

Example 18

The procedure described in the first stage of Example 17 was repeated, except that the amount of 25%

fuming sulphuric acid was increased to 180 g and the time taken to drop it into the flask was increased to 1 hour. The conversion at the end of the first stage was 12%.

At the end of this stage, the internal temperature was increased to 30°C and the reaction was continued for a further 1 hour. At the end of this time, 130 g of water were added to terminate the polymerization and the conversion was determined to be 52%.

The dropping funnel was replaced by a distillation column, and then a solution prepared by dissolving 101 g of sodium hydroxide in 130 g of water was added continuously over a period of 1 hour, whilst heating the mixture over an oil bath at 80°C. Heating was continued at 80°C to continue the hydrolysis reaction for 1 hour after the addition was complete. Unreacted tetrahydrofuran was simultaneously recovered by distillation during this operation. A solution prepared by dissolving 23 g of sodium hydroxide in 25 g of water was then added continuously over 1 hour and, at the same time, the oil bath temperature was raised to 100°C, to continue the hydrolysis whilst continuing to recover unreacted tetrahydrofuran. At the end of this treatment, the reaction mixture was allowed to stand, whereupon it separated into layers. Approximately 90% of the aqueous layer was withdrawn, and 150 g of a 20% by weight aqueous solution of sodium sulphate were added to the residue. The resulting mixture was subjected to heating and washing at 100°C for 2 hours. Then, following the same procedure as in the previous Examples, the aqueous layer was removed and the PTMG layer was again subjected to a heating and washing treatment at 80°C for 30 minutes, after which the same operation was repeated once more. The resulting product was then treated as described in Example 17, to give the desired PTMG. The results of its analyses are shown in Table 2.

Example 19

The same experimental procedures as described in Example 17 were repeated up to and including the removal of the aqueous layer after the heating and hydrolysis at 80°C with the sodium hydroxide solution.

The withdrawn aqueous layer was neutralized with a 10% by weight aqueous solution of sodium hydroxide until the pH of the solution became about 6. A sufficient quantity of a 1% by weight aqueous solution of sodium carbonate was then added until the pH of the solution reached a value of 7. Water was then added to adjust the sodium sulphate concentration in the solution to 15% by weight. 300 g portions of the resulting solution were then used instead of the sodium sulphate solution to carry out the washing treatment described in Example 17. The rsults of the analyses of the PTMG so obtained are shown in Table 2.

Example 20

The procedure described in Example 17 was repeated, except that, between the first and second washing treatments with sodium sulphate, the aqueous layer withdrawn after the first washing treatment was neutralized to a pH of 7 by the addition of a 1% by weight aqueous solution of sodium carbonate and the resulting solution was added to the PTMG layer, after which the second washing treatment was carried out. The results of the analyses of the PTMG so obtained are shown in Table 2.

Example 21

The procedure described in Example 16 was repeated, except that the sodium sulphate solution was replaced by 300 g of a 20% by weight aqueous solution of magnesium sulphate. The results of the analyses of the resulting PTMG are shown in Table 2.

Example 22

The procedure described in Example 15 was repeated, except that the tetrahydrofuran was replaced by a mixture of 500 g of tetrahydrofuran and 100 g of 3,3-dimethyloxacyclobutane. In this case, the conversion in the first stage of the reaction was 41% and the final conversion was 72%. The results of the analyses of the copolymerized polyether glycol so obtained are shown in Table 2.

TABLE 2

Analytical results of PTMG type polyether glycol

| Example No. | Number-average molecular weight | Hydroxyl number (mgKOH/g) | Acid number (mgKOH/g) | Amount of sulphuric ester groups (ppm*1) | Amount of residual acid matter (ppm*1) |
|---|---|---|---|---|---|
| 15 | 1,910 | 59.3 | 0.023 | <3*2 | 5 |
| 16 | 980 | 115 | 0.025 | <3*2 | <3*2 |
| 17 | 990 | 112 | 0.022 | <3*2 | <3*2 |
| 18 | 690 | 165 | 0.025 | 5 | <3*2 |
| 19 | 990 | 113 | 0.015 | 5 | 6 |
| 20 | 990 | 112 | 0.024 | <3*2 | <3*2 |
| 21 | 970 | 115 | 0.033 | 6 | <3*2 |
| 22 | 2,320 | 48.8 | 0.016 | <3*2 | <3*2 |

Note:

*1: Content (ppm) in terms of $SO_4^{2\ominus}$ in PTMG type polyether glycol.

*2: Below analytical limits.

Example 23

Using the same reaction apparatus as is described in Example 15, 100 g of 25% fuming sulphuric acid were dropped into 500 g of tetrahydrofuran at −20°C over 40 minutes. The resulting mixture was then allowed to react at −20°C for 2 hours. The conversion at this point was 31%.

The reaction mixture was then heated to 10°C and allowed to react at this temperature for 2 hours, after which 10 g of water were added to the mixture to terminate the polymerization. The final conversion was 58%.

400 g of water were then added to the reaction mixture, and the dropping funnel was replaced by a distillation column. The contents of the flask were then heated, with stirring, for 2 hours over an oil bath at 100°C, to hydrolyze the polymer and distil off and recover the unreacted tetrahydrofuran. The contents of the flask were then allowed to stand at 100°C to cause separation of the layers and the aqueous layer was withdrawn. To the resulting PTMG layer were added 230 g of water and 20 g of the withdrawn aqueous layer, and the resulting mixture was refluxed, with heating and stirring over an oil bath at 120°C for 2 hours to hydrolyze the polymer; the mixture was then allowed to stand at 100°C to allow separation of the layers, after which the separated aqueous layer was withdrawn. The amount of residual sulphuric ester groups in the PTMG was 5 ppm and the acid number was 0.21.

To the resulting PTMG layer were added a further 250 g of water having suspended therein 0.25 g of basic magnesium carbonate, and the resulting mixture was subjected to a heating and washing treatment over an oil bath at 100°C for 1 hour, whilst stirring the mixture vigorously. The mixture was then allowed to stand to allow separation of the layers. The mixture did not emulsify throughout the treatment and, on standing, the mixture underwent separation of layers in a very short time, and the PTMG layer after separation was almost transparent.

The aqueous layer was removed and the PTMG layer was subjected to complete evaporation of volatile matter under reduced pressure at 80°C. It was then filtered through a 10 μm mesh membrane filter, to give 260 g (yield 52%) of a colourless, transparent PTMG. This PTMG was analyzed to determine its number-average molecular weight, hydroxyl number, acid number and quantity of residual sulphuric ester groups, and the results of these analyses are shown in Table 3.

Example 24

The procedure described in Example 23 was repeated, except that the basic magnesium carbonate was replaced by 0.15 g of magnesium hydroxide. The results of the analyses of the PTMG thus obtained are shown in Table 3.

Example 25

The procedure described in Example 23 was repeated, except that the aqueous suspension of basic magnesium carbonate was replaced by a solution prepared by blowing an appropriate amount of carbon

dioxide gas into water having suspended therein 0.25 g of magnesium carbonate. The analyses of the resulting PTMG are shown in Table 3.

Example 26

Polymerization was carried out under the conditions described in Example 23. At the end of the polymerization, 440 g of water were added to the polymerization product and the mixture was heated and hydrolyzed over an oil bath at 80°C, with stirring, for 1 hour, whilst recovering the unreacted tetrahydrofuran. The oil bath temperature was then raised to 100°C, and 170 g of a 48% by weight aqueous solution of sodium hydroxide were added continuously over a period of 1 hour. The mixture was then stirred and hydrolyzed at 100°C for 2 hours, whilst recovering the unreacted tetrahydrofuran, after which it was allowed to stand at 100°C to cause separation of the layers. Part of the separated PTMG layer was sampled and it was determined that the amount of residual sulphuric ester groups was below 3 ppm and the acid value was 0.25.

5.4 g of solid basic magnesium carbonate were added to the system, without withdrawing the aqueous layer, and the system was stirred gently. Consequently, most of the solids dissolved in the aqueous layer and the pH of the mixture became 8. The system was then heated over an oil bath at 80°C for 2 hours, washed, with stirring, and then allowed to stand at 80°C to allow separation of the layers. The pH of the system remained at a value of about 8 throughout this treatment. Also, the system did not emulsify and substantially no difficulty was encountered in separating the layers; the PTMG layer separated was almost transparent. This PTMG layer was treated as described in Example 17, to give a PTMG, the results of whose analyses are shown in Table 3.

Example 27

The procedure described in Example 26 was repeated, until the hydrolysis treatment. At this point, without withdrawing the aqueous layer, 21 g of a 20% by weight aqueous solution of sodium hydroxide were added and the mixture was heated over an oil bath at 80°C, with stirring, for about 20 minutes. The pH of the mixture at this point was about 5. 1.5 g of a 15% by weight aqueous suspension of basic magnesium carbonate were then added and the mixture was heated and washed, with stirring, at 80°C for 1 hour, after which it was allowed to stand to allow separation of the layers. The pH of the mixture remained at a value of about 8 throughout the treatment, there was substantially no emulsification and separation of the layers occurred easily; the separated PTMG layer was almost transparent. PTMG was then obtained by the treatment described in Example 17 and analyzed as in Example 17, to give the results shown in Table 3.

Example 28

Following the procedure described in Example 17, a solution prepared by dissolving 1.5 g of sodium borofluoride in 55 g of 25% fuming sulphuric acid was dropped, over a period of 30 minutes, into 500 g of tetrahydrofuran maintained at −10°C. The mixture was then allowed to react at −10°C for 1 hour. The conversion at this point was 20%.

The reaction mixture was then heated to 20°C and allowed to react at this temperature for 2 hours. The final conversion was 61%.

To the polymerization product were added 520 g of water and the mixture was heated, with stirring, on an oil bath at 80°C for 2 hours, whilst distilling off and recovering the unreacted tetrahydrofuran. The oil bath temperature was then raised to 100°C, and 50 g of a 48% by weight aqueous solution of sodium hydroxide were added continuously over a period of 1 hour, to hydrolyze the reaction mixture. Recovery of unreacted tetrahydrofuran was continued throughout this addition. On completion of the addition, the mixture was allowed to stand at 100°C, to allow separation of the layers. The aqueous layer was withdrawn, and 250 g of water and a part of the withdrawn aqueous layer were added to the remaining PTMG layer, after which the sulphuric acid concentration in the aqueous layer was adjusted to about 1% by weight and the mixture was again heated and stirred on an oil bath at 100°C for 2 hours to complete the hydrolysis. The mixture was then allowed to stand at 100°C, to allow the layers to separate. Part of the separated PTMG layer was sampled and found to contain 4 ppm of residual sulphuric ester groups and have an acid number of 0.27.

Without withdrawing the aqueous layer, 9.7 g of a 20% by weight aqueous solution of sodium hydroxide were added, and the mixture was heated and stirred on an oil bath at 80°C for about 15 minutes. 1.3 g of a 15% by weight aqueous suspension of basic magnesium carbonate were then added to adjust the pH of the mixture to a value of about 8, after which the mixture was again heated and washed, with stirring, on an oil bath at 80°C for 2 hours. The mixture was then allowed to stand to allow the layers to separate. No emulsification was observed through this treatment, separation of the layers was easy and the separated PTMG layer was only slightly turbid. After removing the aqueous layer, the remaining PTMG layer was treated as described in Example 17 to give a PTMG. The results of its analyses are shown in Table 3.

TABLE 3
Analytical results of PTMG type polyether glycol

| Example No. | Number-average molecular weight | Hydroxyl number (mgKOH/g) | Acid number (mgKOH/g) | Amount of residual sulphuric ester groups (ppm*1) | Separation of layers after washing | Amount of residual acid matter (ppm*1) |
|---|---|---|---|---|---|---|
| 23 | 980 | 116 | 0.025 | 4 | Separated in short time | 6 |
| 24 | 980 | 115 | 0.024 | 5 | " | 4 |
| 25 | 970 | 115 | 0.020 | $<3^{*2}$ | " | $<3^{*2}$ |
| 26 | 970 | 116 | 0.018 | $<3^{*2}$ | " | $<3^{*2}$ |
| 27 | 970 | 116 | 0.020 | $<3^{*2}$ | " | $<3^{*2}$ |
| 28 | 1,940 | 57.9 | 0.030 | 4 | " | 5 |

Note:
*1, *2: See Table 2.

## Claims

1. A process for preparing a polyether glycol, in which:

(A) monomer comprising tetrahydrofuran is polymerized in the presence of a ring-opening polymerization catalyst comprising fuming sulphuric acid and/or fluorosulphuric acid;

(B) the reaction product is hydrolyzed under strongly acidic conditions by the addition of water or of an aqueous alkaline solution; and

(C) the hydrolysis product is washed, characterized in that the polymerization of step (A) is effected by:

(1) in a first stage, contacting said monomer with said catalyst at a temperature of from −30°C to +10°C and
(2) in a subsequent stage, when conversion of said monomer to polymer is at least 5%, elevating the reaction temperature to a value which is from 0°C to 40°C and is at least 10°C higher than the temperature in said first stage, and continuing the polymerization at the elevated temperature.

2. A process according to Claim 1, in which the temperature in said first stage is from −30°C to 0°C.

3. A process according to Claim 1 or Claim 2, in which, in said subsequent stage, when said conversion is at least 10%, the reaction temperature is elevated to a value which is from 10°C to 40°C and is at least 15°C higher than the temperature in said first stage.

4. A process according to any one of the preceding Claims, in which the hydrolysis in step (B) is effected by adding to the reaction system an alkali in an amount of at least one quarter the quantity necessary to neutralize the mixture of water and fuming sulphuric acid and/or fluorosulphuric acid used in the polymerization and which is sufficient to maintain the pH of the hydrolysis system at a value of 3 or less.

5. A process according to Claim 4, in which the whole of the alkali is added prior to hydrolysis.

6. A process according to Claim 4, in which the alkali is added stepwise or continuously during the hydrolysis.

7. A process according to any one of the preceding Claims, in which the temperature during the hydrolysis in step (B) is from 50°C to 150°C.

8. A process according to any one of the preceding Claims, in which the washing in step (C) is effected with an aqueous solution of a neutral sulphate or an aqueous solution of the basic magnesium compound.

9. A process according to Claim 8, in which said neutral sulphate is sodium sulphate, potassium sulphate or magnesium sulphate.

10. A process according to Claim 8 or Claim 9, in which the amount of said aqueous solution of neutral sulphate is from 20 to 200 parts by weight per 100 parts by weight of the polyether glycol.

11. A process according to any one of Claims 8 to 10, in which washing with said aqueous solution of neutral sulphate is effected at a temperature of from 50°C to 150°C.

12. A process according to Claim 8, in which said basic magnesium compound is magnesium hydroxide, magnesium oxide, magnesium carbonate, basic magnesium carbonate or a mixture thereof.

13. A process according to Claim 8 or Claim 12, in which the amount of said aqueous solution of basic magnesium compound is from 10 to 500 parts by weight per 100 parts by weight of said polyether glycol.

14. A process according to any one of the preceding Claims, in which said tetrahydrofuran is copolymerized with another copolymerizable cyclic ether.

15. A process according to Claim 14, in which said copolymerizable cyclic ether is ethylene oxide, propylene oxide, epichlorohydrin, oxacyclobutane, 3,3-dimethyloxacyclobutane, 3,3-bis(chloromethyl)oxacyclobutane, 2-methyltetrahydrofuran, 3-methyltetrahydrofuran, 2,5-dihydrofuran, tetrahydropyran or oxacycloheptane.

16. A process according to Claim 14 or Claim 15, in which the amount of said copolymerizable cyclic ether is no more than 100 parts by weight per 100 parts by weight of said tetrahydrofuran.

17. A process according to any one of Claims 1 to 13, in which said monomer consists solely of said tetrahydrofuran.

## Patentansprüche

1. Verfahren zur Herstellung von Polyetherglykolen durch

(A) Polymerisation eines Tetrahydrofuran-Monomers in Gegenwart von rauchender Schwefelsäure und/oder Fluorschwefelsäure als ringöffnenden Polymerisations-Katalysator,

(B) Hydrolyse des Reaktionsprodukts unter stark sauren Bedingungen durch Zugabe von Wasser oder einer wäßrigen alkalischen Lösung und

(C) Waschen des Hydrolyseprodukts, gekennzeichnet durch die Durchführung der Polymerisationsstufe (A)

(1) in einem ersten Schritt durch Kontaktieren des Monomers mit dem Katalysator bei einer Temperatur von −30 bis +10°C und
(2) in einem folgenden Schritt, bei einer Monomer/Polymer-Umwandlung von mindestens 5%, durch Erhöhung der Reaktionstemperatur auf einen Wert von 0 bis 40°C und der mindestens um 10°C höher ist

als die Temperatur des ersten Schritts, und Fortsetzung der Polymerisation bei der höheren Temperatur.

2. Verfahren nach Anspruch 1, gekennzeichnet durch eine Temperatur im ersten Schritt von −30 bis 0°C.

3. Verfahren nach Anspruch 1 oder 2, gekennzeichnet durch die Erhöhung der Reaktionstemperatur im folgenden Schritt, bei einer Umwandlung von mindestens 10%, auf einen Wert von 10 bis 40°C und der um mindestens 15°C höher ist als die Temperatur des ersten Schritts.

4. Verfahren nach einem der vorhergehenden Ansprüche, dadurch gekennzeichnet, daß in der Hydrolysestufe (B) dem Reaktionsgemisch eine alkalische Verbindung in einer Menge zugegeben wird, die mindestens einem Viertel der für die Neutralisation des in der Polymerisation verwendeten Gemisches von Wasser und rauchender Schwefelsäure und/oder Fluorschwefelsäure notwendigen Menge entspricht und die genügt, um den pH-Wert des Hydrolysegemisches auf höchstens 3 zu halten.

5. Verfahren nach Anspruch 4, gekennzeichnet durch die Zugabe der Gesamtmenge an alkalischer Verbindung vor der Hydrolyse.

6. Verfahren nach Anspruch 4, gekennzeichnet durch die stufenweise oder kontinuierliche Zugabe der alkalischen Verbindung während der Hydrolyse.

7. Verfahren nach einem der vorhergehenden Ansprüche, gekennzeichnet durch eine Temperatur in der Hydrolysestufe (B) von 50 bis 150°C.

8. Verfahren nach einem der vorhergehenden Ansprüche, gekennzeichnet durch die Durchführung der Waschstufe (C) mit einer wäßrigen Lösung eines neutralen Sulfats oder einer basischen Magnesiumverbindung.

9. Verfahren nach Anspruch 8, gekennzeichnet durch die Verwendung von Natriumsulfat, Kaliumsulfat oder Magnesiumsulfat als neutrales Sulfat.

10. Verfahren nach Anspruch 8 oder 9, gekennzeichnet durch die Verwendung der wäßrigen Lösung eines neutralen Sulfats in einer Menge von 20 bis 200 Gewichtsteilen je 100 Gewichtsteile Polyetherglykol.

11. Verfahren nach einem der Ansprüche 8 bis 10, gekennzeichnet durch das Waschen mit der wäßrigen Lösung eines neutralen Sulfats bei einer Temperatur von 50 bis 150°C.

12. Verfahren nach Anspruch 8, gekennzeichnet durch die Verwendung von Magnesiumhydroxid, Magnesiumoxid, Magnesiumcarbonat und/oder basischem Magnesiumcarbonat als basische Magnesiumverbindung.

13. Verfahren nach Anspruch 8 oder 12, gekennzeichnet durch die Verwendung der wäßrigen Lösung einer basischen Magnesiumverbindung in einer Menge von 10 bis 500 Gewichtsteilen je 100 Gewichtsteile Polyetherglykol.

14. Verfahren nach einem der vorhergehenden Ansprüche, gekennzeichnet durch die Copolymerisation des Tetrahydrofurans mit einem anderen copolymerisierbaren cyclischen Ether.

15. Verfahren nach Anspruch 14, gekennzeichnet durch die Verwendung von Ethylenoxid, Propylenoxid, Epichlorhydrin, Oxacyclobutan, 3,3-Dimethyloxacyclobutan, 3,3-Bis(chlormethyl)oxacyclobutan, 2-Methyltetrahydrofuran, 3-Methyltetrahydrofuran, 2,5-Dihydrofuran, Tetrahydropyran oder Oxacycloheptan als copolymerisierbaren cyclischen Ether.

16. Verfahren nach Anspruch 14 oder 15, gekennzeichnet durch die Verwendung des copolymerisierbaren cyclischen Ethers in einer Menge von höchstens 100 Gewichtsteilen je 100 Gewichtsteile Tetrahydrofuran.

17. Verfahren nach einem der Ansprüche 1 bis 13, gekennzeichnet durch die Verwendung von Tetrahydrofuran allein als Monomer.

**Revendications**

1. Procédé de préparation d'un polyéther glycol dans lequel:

(A) un monomère comprenant du tétrahydrofuranne est polymérisé en présence d'un catalyseur de polymérisation qui ouvre le cycle comprenant de l'acide sulfurique fumant et/ou de l'acide fluorosulfurique;

(B) le produit de réaction est hydrolysé dans les conditions fortement acides par addition d'eau ou d'une solution alcaline aqueuse; et

(C) le produit d'hydrolyse est lavé, caractérisé en ce que la polymérisation du stade (A) est réalisée par:

(1) dans une première étape, mise en contact dudit monomère avec ledit catalyseur à une température comprise entre −30°C et +10°C et

(2) dans une étape ultérieure, lorsque la conversion du monomère en polymère est d'au moins 5%, élévation de la température de réaction jusqu'à une valeur qui est comprise entre 0°C et 40°C et qui est supérieure d'au moins 10°C à la température à la première étape, et poursuite de la polymérisation à la température élevée.

2. Procédé selon la revendication 1, caractérisé en ce que la température à la première étape est comprise entre −30°C et 0°C.

3. Procédé selon la revendication 1 ou 2, caractérisé en ce que dans l'étape ultérieure, lorsque la conversion est d'au moins 10%, la température de réaction est élevée jusqu'à une valeur qui est comprise entre 10°C et 40°C et qui est supérieure d'au moins 15°C à la température à la première étape.

4. Procédé selon l'une quelconque des revendications précédentes, caractérisé en ce que l'hydrolyse au stade (B) est réalisée par addition, au système de réaction, d'un alcali en quantité égale à au moins un quart de la quantité nécessaire pour neutraliser le mélange d'eau et d'acide sulfurique fumant et/ou d'acide fluorosulfurique employé dans la polymérisation et qui est suffisante pour maintenir le pH du système d'hydrolyse à une valeur de 3 ou moins.

5. Procédé selon la revendication 4, caractérisé en ce que la totalité de l'alcali est ajoutée avant l'hydrolyse.

6. Procédé selon la revendication 4, caractérisé en ce que l'alcali est ajouté par étapes ou en continu pendant l'hydrolyse.

7. Procédé selon l'une quelconque des revendications précédentes, caractérisé en ce que la température pendant l'hydrolyse au stade (B) est comprise entre 50°C et 150°C.

8. Procédé selon l'une quelconque des revendications précédentes, caractérisé en ce que le lavage au stade (C) est réalisé avec une solution aqueuse d'un sulfate neutre ou une solution aqueuse d'un composé basique de magnésium.

9. Procédé selon la revendication 8, caractérisé en ce que ledit sulfate neutre est le sulfate de sodium, le sulfate de potassium ou le sulfate de magnésium.

10. Procédé selon la revendication 8 ou 9, caractérisé en ce que la quantité de solution aqueuse de sulfate neutre est comprise entre 20 et 200 parties en poids pour 100 parties en poids de polyéther glycol.

11. Procédé selon l'une quelconque des revendications 8 à 10, caractérisé en ce que le lavage avec la solution aqueuse de sulfate neutre est effectué à une température comprise entre 50°C et 150°C.

12. Procédé selon la revendication 8, caractérisé en ce que le composé basique de magnésium est l'hydroxyde de magnésium, l'oxyde de magnésium, le carbonate de magnésium, le carbonate basique de magnésium ou un mélange de ceux-ci.

13. Procédé selon la revendication 8 ou 12, caractérisé en ce que la quantité de solution aqueuse de composé basique de magnésium est comprise entre 10 et 500 parties en poids pour 100 parties en poids de polyéther glycol.

14. Procédé selon l'une quelconque des revendications précédentes, caractérisé en ce que le tétrahydrofuranne est copolymérisé avec un autre éther cyclique copolymérisable.

15. Procédé selon la revendication 14, caractérisé en ce que l'éther cyclique copolymérisable est l'oxyde d'éthylène, l'oxyde de propylène, l'épichlorhydrine, l'oxacyclobutane, le 3,3-diméthyloxacyclobutane, le 3,3-bis-(chlorométhyl)-oxacyclobutane, le 2-méthyltétrahydrofuranne, le 3-méthyltétrahydrofuranne, le 2,5-dihydrofuranne, le tétrahydropyranne ou l'oxacycloheptane.

16. Procédé selon la revendication 14 ou 15, caractérisé en ce que la quantité d'éther cyclique copolymérisable ne dépasse par 100 parties en poids pour 100 parties en poids de tétrahydrofuranne.

17. Procédé selon l'une quelconque des revendications 1 à 13, caractérisé en ce que ledit monomère est constitué uniquement de tétrahydrofuranne.